# EUROPEAN PATENT APPLICATION

(11) **EP 0 582 437 A2**
(43) Date of publication of application: **09.02.1994**
(21) Application number: 93305988.3
(22) Date of filing: 28.07.1993
(51) Int. Cl.: G01N 19/04, G01N 3/00

(54) **Test for bond strength**

(30) Priority: 07.08.1992 GB 9216856
(71) Applicant: BRITISH AEROSPACE PUBLIC LIMITED COMPANY, Farnborough, Hants. GU14 6YU (GB)
(72) Inventor: Bottomley, Ian Edward, Preston, Lancashire PR4 1AX (GB); Strickland, George, Preston, Lancashire PR4 1AX (GB)
(74) Representative: Barradell-Smith, Ann

(57) **Abstract**

The invention provides a method and apparatus for testing the strength of a bond (16) between a first component (12) and a second component (14) by taking a sample (10) and engaging each of the first and second components, with the second component being engaged by way of an opening (18) in the first. An increasing force is applied between the components (12, 14) for applying tension to the bond (16), with the force being exerted in a direction substantially perpendicular to a main plane of the bond (16). The force is recorded when the bond fails as a measure of the tensile strength of the bond.

## Description

The present invention relates to the testing of the lap strength of a bond between two components.

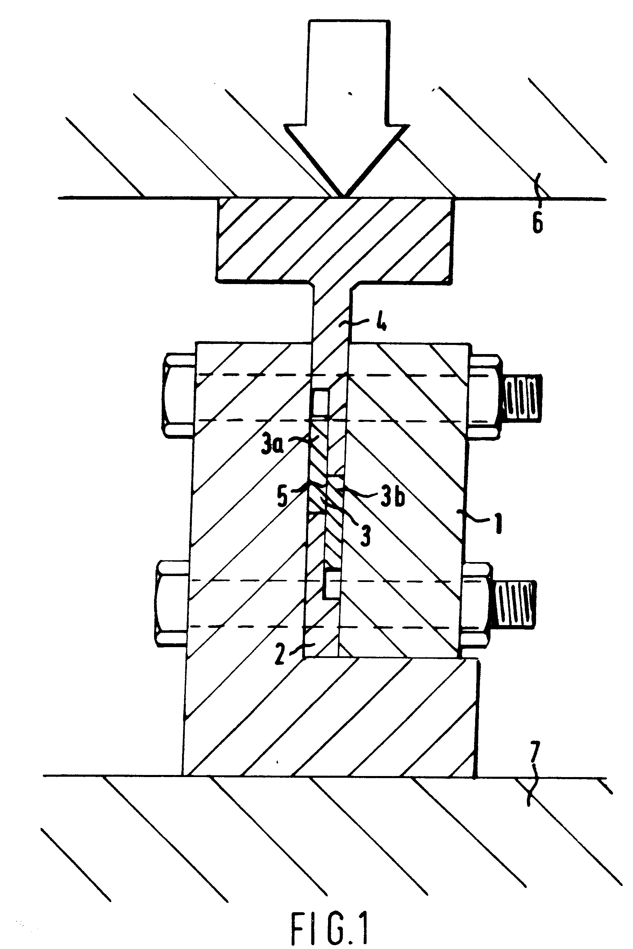

Figure 1 shows a conventional test rig for testing the lap shear strength of a bond between two components.

A sample 3 is prepared for testing and is composed of two components 3a and 3b, joined together in an overlapping region by a bond 5, whose strength is to be tested. The sample may be made by joining components 3a and 3b along their entire adjacent surfaces and machining away parts of the respective components on either side of the bond as shown in Figure 1. The sample 3 is then placed in a channel 1 so that it sits on a push member 23 which engages only component 3a. A further push member 4 engages component 3b and the test rig is placed between the platens 6 and 7 of a press, which compresses the sample 3 between the push members 2 and 4 so that a force is applied along the line of the bond until the bond fails. The force exerted by the press at the point of failure is recorded as the lap shear strength of the bond.

One disadvantage of the process described is that it is insensitive to bond line defects, especially if the bone line is not straight. Another disadvantage of the described process lies in the fact that the push members 2 and 4 exert a turning moment on the sample 3. The sample cannot move under this moment because the sample is located in channel 1 but it causes frictional forces between the sample 3 and the channel 2 which leads to inaccuracies.

Instead of measuring the strength of bond 5 by exerting compressive forces on the sample 3, it is possible to test the sample by exerting a tensile force between the ends of components 3a and 3b until the bond fails. The tensile force urges the sample towards an orientation in which the bond 5 does not lie parallel to the direction of the tensile force, leading to errors in the test results. It is possible to place the sample in a jig so that the sample is held in an orientation in which the bond does lie parallel to the direction of the tensile force but this leads to frictional forces between the jig and the sample, which again causes errors in the test results.

The present invention is intended to overcome the above problems and provide a method and apparatus for accurately testing the strength of a bond between two components.

According to the present invention, there is provided a method of testing the strength of a bond between a first component and a second component, the method comprises:
forming an opening in the first component (if not already present) whereby the second component can be engaged via the opening,
engaging the second component via the said opening,
engaging the first component,
exerting an increasing force between the engagement locations of the two components that applies tension to the bond and is exerted in a direction substantially perpendicular to the plane of the bond, and
recording the force exerted when the bond fails.

Preferably, the first component extends beyond the second component (optimally around the whole circumference of the second component) so that the first component can be engaged by means of the said extended portion, e.g. by placing a sample composed of the first and second component into a jig that includes an opening of a shape corresponding to the shape of the sample but which is slightly smaller than the sample so that the extended portion of the first component rests on the edge of a cavity.

In a particularly preferred embodiment, the sample is symmetrical about the opening in the first component (and most preferably is circular).

A test sample and a test rig for testing the strength of a bond between components in the sample is shown, by way of example only, with reference to Figures 2 to 6 in which:
Figure 2 is a sectional elevation of the test rig;
Figure 3 is a plan view of the test rig;
Figure 4 is a vertical sectional view of a bonded article from which a sample is prepared for use in testing in the rig shown in Figures 2 and 3;
Figure 5 is a vertical sectional view of a sample for use in testing in the rig shown in Figures 2 and 3; and
Figure 6 is a plan view of the sample of Figure 5.

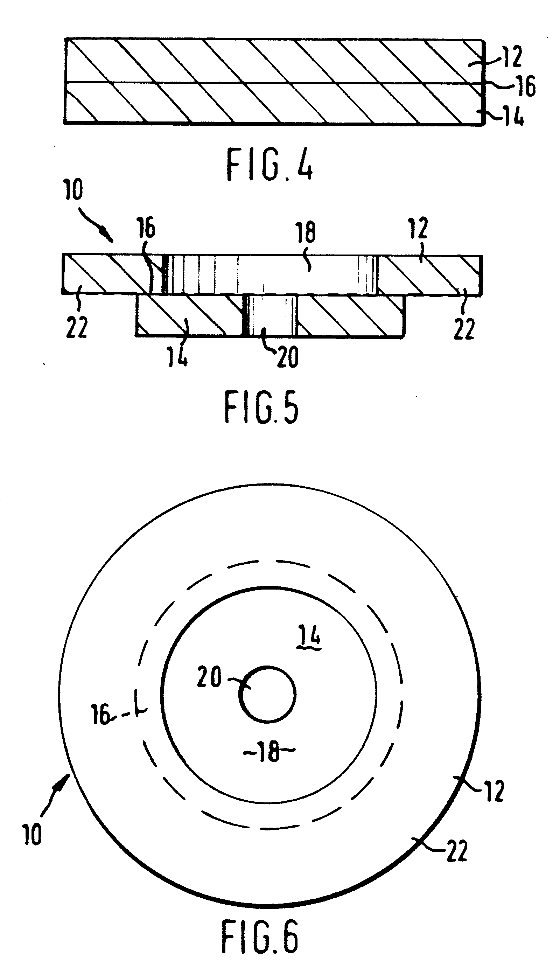

Referring initially to Figure 4, two components 12, 14 are joined together by means of a substantially plane bond 16, which is the bond that is to be tested. The bonded components are then machined to form the sample 10 shown in Figure 5 by forming a relatively large circular central opening 18 in the first component 12, a narrow bore 20 in the second component 14 and by machining away the underside of the second component 14 to provide an annular overhanging region 22 of the first component 12. The overhanging region 22 extends around the entire periphery of the sample 10. The sample 10 is circular in plan and is symmetrical about the opening 18 (as can be seen in Figure 6).

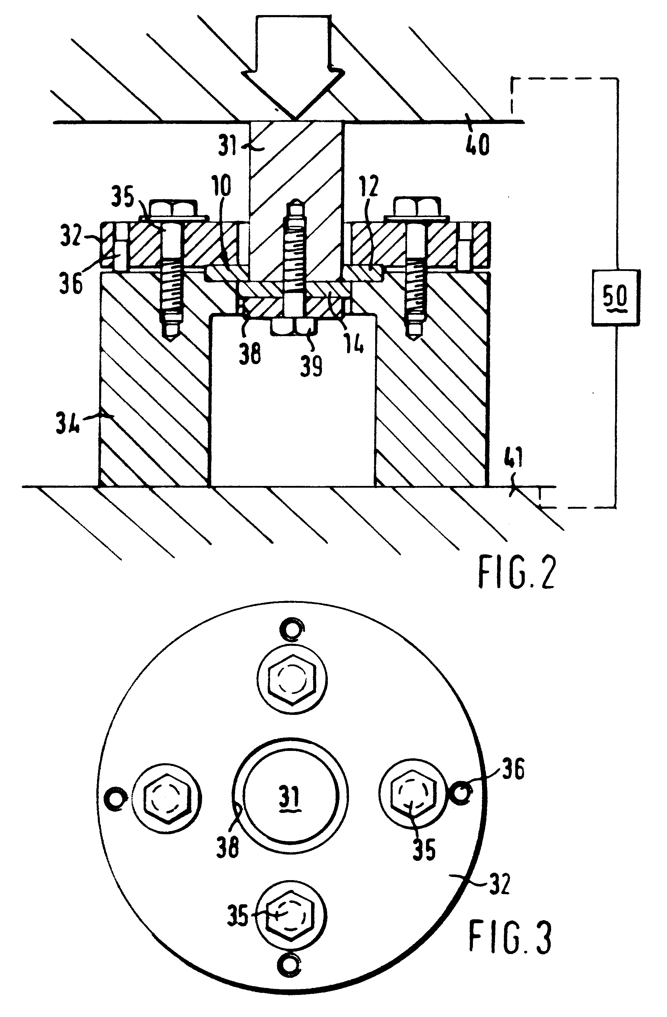

A rig for testing the samples of Figures 5 and 6 is shown in Figures 2 and 3 and comprises a base 34 having a central opening 38 of circular shape, the opening having a diameter larger than that of the second component 14 but smaller than that of the overhanging region 22 of the first component 12. The sample 10 is located with the overhanging region 22 of the first component 12 seated on the base 34 and with the second component 14 disposed within the opening 38. The sample 10 is then clamped in place around its periphery by means of an annular ring 32, which engages the first component 12 and is secured by bolts 35 passing through the ring into the base 34. Pins 36 limit the movement of ring 32 and hence the clamping force that can be exerted on sample 10.

The second component 14 of the sample 10 is secured to a ram 31 by means of a bolt 39 that passes through the bore 20 and that has a screw thread engaging in the ram 31.

The test rig is then placed between the platens 40 and 41 of a press and the ram 31 is urged downwardly with increasing force until the bond 16 in the sample 10 fails. The loading force at the time of failure is recorded, by means of measuring apparatus 50 shown schematically only, as the tensile strength of the bond.

As a result of conducting the test using the rig shown, which supports the overhanging region 22 symmetrically around the opening 18, the applied force is perpendicular to the plane of the bond 16 and no couple is exerted on the sample during testing. Hence the force exerted on the sample at the point when the bond fails is a true measure of the tensile strength of the bond.

Various modifications in the described test rig are possible, including an arrangement in which the second component 14 of the sample 10 is pulled, rather than pushed, downwardly until the bond 16 fails.

It is possible for the sample to be other than circular, and for the bonded surfaces of the first and second components to be slightly dished, for example, as opposed to completely flat.

## Claims

1. A method of testing the strength of a bond between a first component (12) and a second component (14), comprising:
providing a sample (10) of the first component 12) and the second component (14) having a bond (16) therebetween,
engaging respectively each of the first and second components (12, 14),
exerting an increasing force applied between the engagement locations of the first and second components (12, 14) to apply tension to the bond (16), and
recording the force exerted when the bond (16) fails,
characterised in that:
the second component (14) is engaged by way of an opening (18) in the first component (12) for applying the force, and the force is exerted in a direction substantially perpendicular to a main plane of the bond (16).

2. A method according to claim 1, characterised by machining the opening in the first component (12) for engagement of the second component (14).

3. A method according to claim 1 or 2, characterised in that the first component (12) extends beyond the second component (14), and in that the first component is engaged by means of the extended portion (22).

4. A method according to claim 3, characterised by machining the second component (14) to provide the extended portion (22) for engagement of the first component (12).

5. A method according to claim 3 or 4, characterised in that the extended portion (22) is provided around the whole circumference of the second component (14).

6. A method according to any of claims 1 to 5, characterised in that the sample (10) is symmetrical about the opening (18) in the first component (12).

7. A method according to claim 6, characterised in that the sample (10) is circular.

8. Apparatus for testing the strength of a bond (16) between a first component (12) and a second component (14), comprising first and second means (34, 31) for engaging respectively each of the first and second components (12, 14),
means (40, 41) for exerting an increasing force applied by way of the first and second engaging means between the engagement locations of the first and second components (12, 14) to apply tension to the bond (16), and
means (50) for recording the force exerted when the bond (16) fails,
characterised in that:
the second engaging means (31) are arranged to engage the second component (14) by way of an opening (18) in the first component (12), and co-operate with the first engaging means (34) to apply the force in a direction substantially perpendicular to a main plane of the bond (16).
